# FASCICULE DE BREVET EUROPEEN

(11) **EP 3 736 428 B1**
(45) Date de publication et mention de la délivrance du brevet: **23.11.2022**
(21) Numéro de dépôt: 20173233.6
(22) Date de dépôt: 06.05.2020
(51) Int. Cl.: F02C 7/36, F01D 25/18, F02C 7/28, F16D 3/06

(54) **GORGE DE JOINT RAPPORTÉE POUR ACCOUPLEMENT PAR CANNELURES**
VERSETZTE DICHTUNGSNUT FÜR KEILNUTKUPPLUNG
OFFSET SEAL GROOVE FOR COUPLING BY MESHING

(30) Priorité: 06.05.2019 FR 1904739
(43) Date de publication de la demande: 11.11.2020
(73) Titulaire: Safran Transmission Systems, 92700 Colombes (FR)
(72) Inventeur: BRANDT, Bernard, Georges, 77550 MOISSY-CRAMAYEL (FR); ROYER, Denis, Robert, Georges, 77550 MOISSY-CRAMAYEL (FR)
(74) Mandataire: Gevers & Orès

(56) Documents cités:
- EP-A1- 3 043 091
- EP-A2- 1 177 918
- GB-A- 796 806
- US-A1- 2016 273 592

## Description

### Domaine technique de l'invention

L'invention concerne un dispositif d'accouplement par cannelures de deux organes de turbomachine d'aéronef. Le domaine d'application de l'invention est celui des turbomachines pour moteurs d'avions ou d'hélicoptères, ainsi que pour les groupes auxiliaires de puissance (ou APU pour Auxiliary Power Unit).

### Arrière-plan technique

Dans une turbomachine d'aéronef, de nombreux organes sont accouplés par l'intermédiaire de dispositifs d'accouplement à cannelures, tels que des dispositifs décrits dans les documents EP-1.177.918-A2, GB-796.806-A et US-2016/273592-A1.

En particulier, une turbomachine d'avion ou d'hélicoptère comporte par exemple un boîtier pour l'entraînement de plusieurs accessoires de la turbine ou d'équipements annexes, couramment appelé AGB (acronyme de Accessory Gear Box). Les accessoires de la turbine ou équipements comportent par exemple diverses pompes pour la production d'énergie hydraulique, l'alimentation en carburant, la lubrification, des générateurs électriques pour la production de puissance électrique, etc.

De façon connue en soi, un tel boîtier AGB comporte un ou plusieurs trains d'engrenages qui sont composés chacun de plusieurs roues dentées et qui sont entraînés en rotation par un arbre de transmission de puissance, ce dernier étant couplé à un arbre de la turbine. Chaque accessoire est généralement monté contre l'une des faces latérales du boîtier et comporte un arbre d'entraînement venant se coupler sur l'une des roues dentées du ou des trains d'engrenages, selon un accouplement tel que celui décrit dans le document EP-3.043.091-A1.

Lors du fonctionnement de la turbomachine, une partie de la puissance mécanique générée est prélevée sur un arbre de la turbomachine par l'intermédiaire d'un engrenage et d'un arbre de transmission de puissance qui l'achemine vers le boitier AGB dans lequel les trains d'engrenages la répartissent ensuite aux différents accessoires montés sur le boîtier AGB afin de les actionner.

Les types de boîtiers AGB sont fonction du nombre et de la nature des accessoires à alimenter. Lors de la conception d'un boîtier AGB, il est toutefois important de réduire le plus possible l'encombrement et la masse de ce boîtier, en jouant sur le positionnement des accessoires les uns par rapport aux autres en fonction de leur encombrement individuel et de leur vitesse et sens de rotation. A cet effet, l'accouplement des équipements aux trains d'engrenages sont généralement réalisés par l'intermédiaire d'accouplement cannelés.

En particulier, les trains d'engrenages comportent des roues dentées ou pignons engrenant les uns avec les autres et auxquels sont accouplés les équipements ou accessoires. Pour cela, les pignons comprennent des cannelures internes d'accouplement à des cannelures complémentaires des arbres des accessoires ou équipements.

Pour augmenter la compacité du boîtier AGB et de ses équipements, les accessoires ou équipements sont fixés à deux faces axialement opposées du boîtier AGB et sont souvent accouplés par paire à des pignons communs.

Il est donc nécessaire d'autoriser des déplacements axiaux relatifs entre l'arbre de chaque accessoire et le pignon associé, ce que permet la présence de cannelures.

La transmission du mouvement entre l'arbre de la turbomachine et le boîtier d'accessoires est par ailleurs réalisée généralement par un arbre sensiblement radial en deux parties, chacune de ces parties étant accouplée à l'autre par l'intermédiaire de cannelures. Du fait de la grande longueur de cet arbre, des désalignements importants peuvent survenir, et pour ce faire les deux parties d'arbre sont accouplées par l'intermédiaire de cannelures d'accouplement bombées, ce qui permet d'accoupler les deux parties d'arbre l'une à l'autre malgré un défaut de coaxialité. Le bombé réalisé permet en effet aux cannelures de se mouvoir relativement selon une articulation de rotule et autorise ainsi des déplacements relatifs entre les deux parties d'arbre.

Qu'il s'agisse de l'accouplement des accessoires aux pignons, ou de deux parties d'arbre entre elles, l'accouplement peut être direct, ou réalisé par l'intermédiaire d'un manchon d'accouplement qui est interposé entre ces éléments.

Par exemple, dans le cas de l'accouplement entre un pignon et un arbre de l'accessoire comportant un tel manchon, le manchon comprend par exemple des cannelures externes d'accouplement avec des cannelures internes du pignon, et des cannelures internes d'accouplement avec des cannelures externes de l'arbre de l'accessoire. En variante, le manchon peut comprendre des cannelures internes d'accouplement avec des cannelures externes du pignon, et des cannelures externes d'accouplement avec des cannelures internes de l'arbre de l'accessoire.

Le manchon assure donc l'accouplement entre l'arbre et le pignon et il est associé à un distributeur et des joints annulaires pour assurer une distribution et une circulation d'huile au niveau et à travers des cannelures en vue de leur lubrification.

La rétention d'huile, et donc l'étanchéité à l'huile entre les cannelures des organes mâles et femelles de ce montage est conventionnellement assurée par un joint annulaire ou torique qui est interposé entre une gorge de l'organe mâle et une surface cylindrique de l'organe femelle qui est décalée axialement par rapport à ses cannelures internes. La gorge de l'organe mâle est formée dans les cannelures de cet organe, de sorte que ses parois sont définies par les extrémités libres des cannelures et sont discontinues.

Une autre solution pouvant être utilisée est celle d'une bague à lèvre qui est installée du côté des cannelures internes. Une telle bague présente l'avantage d'être moins sensible au désalignement, mais elle présente aussi l'inconvénient de se plier à chaque passage des cannelures externes lors des opérations de montage ou démontage de l'arbre ou du manchon, d'où un risque de dégradation de celle-ci au fil des montages et démontages. Le remplacement d'une telle bague lors des opérations de maintenance n'est en outre pas aisé.

A l'usage, du fait du déplacement axial et angulaire relatif des cannelures mâles par rapport aux cannelures femelles, on a constaté une usure du joint annulaire entre les cannelures. Ceci conduit à une perte d'étanchéité entre les cannelures mâle et femelle. Cette perte d'étanchéité s'accompagnant d'un déficit de lubrification, elle peut conduire à terme à l'endommagement des cannelures, voire à leur destruction.

### Résumé de l'invention

L'invention vise à remédier à cet inconvénient en proposant un dispositif d'accouplement qui préserve le joint annulaire de l'usure.

Dans ce but, l'invention propose un dispositif d'accouplement par cannelures de deux organes de turbomachine d'aéronef, dont un organe mâle comportant des cannelures externes engagé dans un organe femelle comportant des cannelures internes complémentaires, ledit dispositif comportant en outre un système de retenue de niveau d'huile de lubrification circulant à travers lesdites cannelures complémentaires, ledit système de retenue d'huile comportant un joint annulaire qui est reçu dans une gorge annulaire de réception du joint portée par l'organe mâle et qui coopère avec une surface cylindrique interne de l'organe femelle décalée axialement des cannelures internes, caractérisé en ce que ladite gorge annulaire de réception est formée dans un insert annulaire qui est rapporté dans une gorge annulaire fixe formée dans les cannelures externes de l'organe mâle.

Selon d'autres caractéristiques du dispositif d'accouplement
- l'insert annulaire comporte au moins une paroi annulaire de fond s'étendant axialement le long d'un fond de la gorge annulaire fixe et au moins deux parois annulaires transversales s'étendant radialement à partir de cette paroi annulaire de fond, qui délimitent axialement la gorge annulaire de réception, lesdites deux parois annulaires transversales prenant appui de part et d'autre de la paroi annulaire de fond sur l'une des deux extrémités axiales libres des cannelures externes de l'organe mâle interrompues par ladite gorge annulaire fixe,
- l'insert comporte en outre deux parois tubulaires axiales, d'un diamètre interne correspondant à celui du jeu de cannelures externes, qui s'étendent de part et d'autre à partir des parois annulaires transversales en prenant appui sur un diamètre externe dudit jeu de cannelures externe,
- la gorge annulaire de réception présente une forme de gouttière annulaire, notamment de section axiale semi-circulaire qui délimite la paroi annulaire de fond et les deux parois annulaires transversales, et qui est agencée selon un diamètre supérieur à celui du jeu de cannelures externes,
- le dispositif comporte au moins un moyen d'ouverture de l'insert annulaire qui est configuré pour permettre une augmentation temporaire de diamètre dudit insert permettant son montage dans la gorge annulaire fixe,
- ledit au moins un moyen d'ouverture de l'insert annulaire comporte au moins une fente coupant l'insert annulaire,
- ledit au moins un moyen d'ouverture de l'insert annulaire comporte deux fentes diamétralement opposées coupant l'insert annulaire en deux demi-inserts semi-annulaires et des moyens de fixation amovibles des deux demi-inserts semi-annulaires l'un à l'autre,
- une face annulaire de la paroi annulaire de fond de l'insert comporte des alvéoles traversant axialement l'insert pour permettre une circulation d'huile sous l'insert.

L'invention concerne aussi une turbomachine d'aéronef comportant un arbre d'accessoire et un pignon d'entraînement d'un boîtier d'accessoires, caractérisée en ce qu'elle comporte un dispositif d'accouplement du type décrit précédemment interposé entre ledit arbre d'accessoire et ledit pignon d'entraînement.

Selon une autre caractéristique de la turbomachine, la turbomachine comportant un carter et le boîtier d'accessoires monté sur ledit carter de ladite turbomachine, ledit boîtier portant au moins un accessoire comportant l'arbre d'accessoire lié en rotation à ladite turbomachine et le boîtier d'accessoires comportant un train d'engrenages interne comportant au moins le pignon d'entraînement accouplé à l'arbre d'accessoire dudit accessoire par l'intermédiaire du dispositif d'accouplement.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig. 1] La figure 1 est une vue en coupe axiale d'une turbomachine connue de l'état de la technique ;
[Fig. 2] La figure 2 est une vue en perspective du boîtier d'accessoires de la turbomachine de l'état de la technique de la figure 1 ;
[Fig. 3] La figure 3 est une vue très schématique d'un boîtier d'accessoires de la turbomachine de l'état de la technique de la figure 1, sur lequel sont montés des équipements ;
[Fig. 4] La figure 4 est une vue d'un dispositif d'accouplement selon l'état de la technique entre un arbre d'un accessoire et un manchon d'accouplement ;
[Fig. 5] La figure 5 est une vue de détail du dispositif d'accouplement de la figure 4 ;
[Fig. 6] La figure 6 est une vue de détail d'un dispositif d'accouplement selon l'invention comportant un premier mode de réalisation d'un insert annulaire interposé entre un arbre d'un accessoire et le manchon d'accouplement analogues à ceux des figures 4 et 5 ;
[Fig. 7] La figure 7 est une vue de détail d'un dispositif d'accouplement selon l'invention comportant un deuxième mode de réalisation d'un insert annulaire interposé entre un arbre d'un accessoire et le manchon d'accouplement des figures 4 et 5;
[Fig. 8] La figure 8 est une vue de détail d'un dispositif d'accouplement selon l'invention comportant un troisième mode de réalisation d'un insert annulaire interposé entre un arbre d'un accessoire et le manchon d'accouplement des figures 4 et 5;
[Fig. 9] La figure 9 est une vue de détail d'un dispositif d'accouplement selon l'invention comportant un quatrième mode de réalisation d'un insert annulaire interposé entre un arbre d'un accessoire et le manchon d'accouplement des figures 4 et 5;
[Fig. 10] La figure 10 est une vue en perspective d'un insert annulaire selon l'invention comportant un premier mode de réalisation d'un moyen d'ouverture dudit insert ;
[Fig. 11] La figure 11 est une vue en perspective d'un insert annulaire selon l'invention comportant un deuxième mode de réalisation d'un moyen d'ouverture dudit insert ; et
[Fig. 12] La figure 12 est une vue en perspective d'un insert annulaire selon l'invention comportant un troisième mode de réalisation d'un moyen d'ouverture dudit insert.

### Description détaillée de l'invention

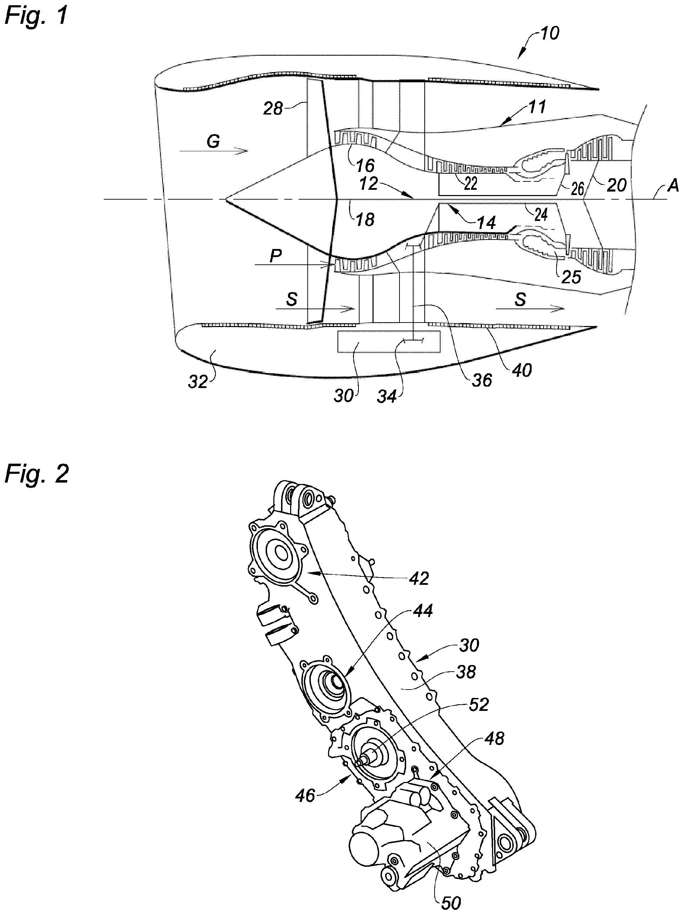

On a représenté sur la figure 1 une turbomachine 10 à turbine à gaz 11 multi-corps d'axe A, notamment destinée à équiper un aéronef.

De manière connue, comme l'illustre la figure 1, la turbomachine 10 comporte au moins un corps tournant basse pression 12 et un corps tournant haute pression 14. Les corps basse pression 12 et haute pression 14 sont ici co-rotatifs mais pourraient également être contra-rotatifs.

Le corps basse pression (BP) 12 comporte pour l'essentiel, suivant le sens d'écoulement des gaz "G", un rotor de compresseur BP 16 relié par un arbre BP 18 à un rotor de turbine BP 20.

Le corps haute pression (HP) 14 comporte pour l'essentiel, suivant le sens d'écoulement des gaz, un rotor de compresseur HP 22 relié par un arbre HP 24 à un rotor de turbine HP 26. Une chambre de combustion 25 est montée entre le compresseur HP 22 et la turbine HP 26 et délivre des gaz de combustion à la turbine HP, dans laquelle les gaz de combustion se détendent pour entraîner en rotation le rotor de la turbine HP 26, qui entraîne à son tour le rotor de compresseur HP 22 par l'intermédiaire de l'arbre HP 24.

Les arbres BP 18 et HP 24 sont coaxiaux. L'arbre HP 24 tubulaire est traversé axialement par l'arbre BP 18 qui est ainsi entouré par l'arbre HP 24.

Dans cette configuration, le compresseur BP 16 alimente en air le compresseur HP 22 qui alimente à son tour en air la chambre de combustion (non représentée). La turbine HP 26 alimente en gaz de combustion la turbine BP 20.

L'arbre BP 18 entraîne pour sa part une soufflante 28 placée en amont des corps basse pression 12 et haute pression 14. Cette soufflante entraîne le flux des gaz G qui se décompose en un flux primaire P qui traverse le moteur à turbine à gaz 11 et un flux secondaire S qui circule autour du moteur à turbine à gaz 11. Les flux primaire P et S se rejoignent au niveau d'une tuyère (non représentée) du moteur 10.

De manière connue, le moteur 10 comporte un boîtier 30 d'entraînement d'équipements accessoires dudit moteur, ou boîtier d'accessoires, qui est monté sur un carter de soufflante 32 ou le carter compresseur HP (non représenté) du moteur et qui porte au moins un démarreur et un certain nombre d'équipements ou accessoires aptes à être liés en rotation à ladite turbomachine tels que, notamment, un générateur électrique, un alternateur, et des pompes hydrauliques à carburant et à huile (non représentés). Un train d'engrenages interne au boîtier 30, dont on a représenté sur la figure 1 un pignon d'entrée 34, est accouplé en rotation au corps haute pression 14 par l'intermédiaire d'un arbre radial 36, pour permettre notamment l'entraînement de ce corps 14 en rotation afin de démarrer ledit moteur.

Le boîtier d'entraînement des équipements accessoires 30 est notamment destiné à équiper tout type de turbomachine, telle qu'un turboréacteur, un turbopropulseur ou un turbomoteur d'avion ou d'hélicoptère.

Le boîtier 30 a été représenté plus particulièrement à la figure 2. Il comporte un carter 38 de forme sensiblement en arc de cercle destiné à épouser sensiblement la forme d'un carter extérieur 40 de la turbomachine qui a été représenté à la figure 1.

Le carter 38 comporte des ports 42, 44, 46, 48 pour l'accouplement d'accessoires tels qu'un démarreur 50. Chacun de ces ports 42, 44, 46, 48 permet de recevoir un arbre tel que l'arbre 52 d'un accessoire (non représenté) qui a été introduit dans le boîtier 30 pour son accouplement à un train d'engrenages interne au boîtier 30.

Le boîtier 30 a été représenté de manière très schématique à la figure 2. Il comprend dans son carter 38 une face latérale avant 54 et une face latérale arrière 56. Dans le carter 38 sont montés un premier train d'engrenages 58 composé de trois roues dentées ou pignons 58a-58c engrenant ensemble et un second train d'engrenages 60 composé de quatre roues dentées ou pignons 60a-60d engrenant ensemble.

Un arbre de transmission de puissance 62 est couplé en rotation au premier et au second train d'engrenages au moyen d'une roue dentée ou pignon double 64. L'arbre 62 émerge de la face latérale avant 54 du boîtier 30.

Dans l'exemple représenté, nullement limitatif, neuf accessoires 50 et 64, 66, 68, 70, 72, 74, 76 distincts de turbine à gaz sont montés contre les faces latérales du boîtier et comportent chacun un arbre respectif 50a et 64a, 66a, 68a, 70a, 72a, 74a, 76a qui est couplé en rotation à l'un des pignons des deux trains d'engrenages.

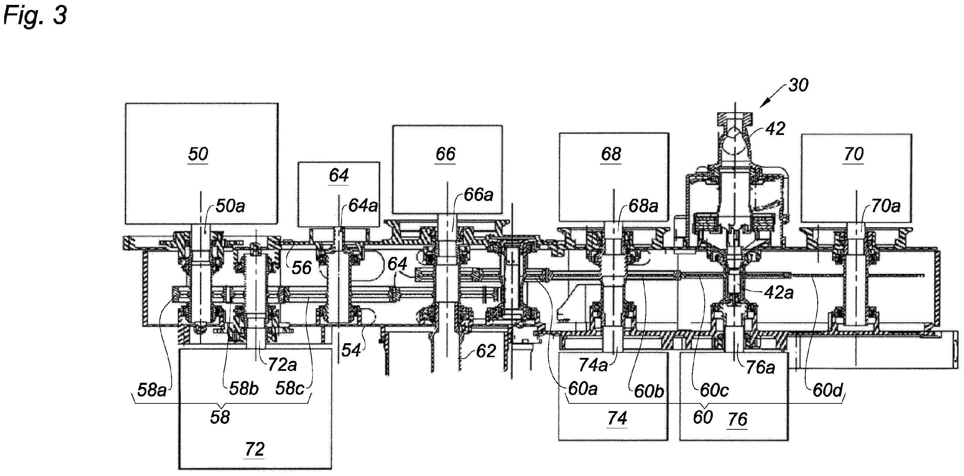

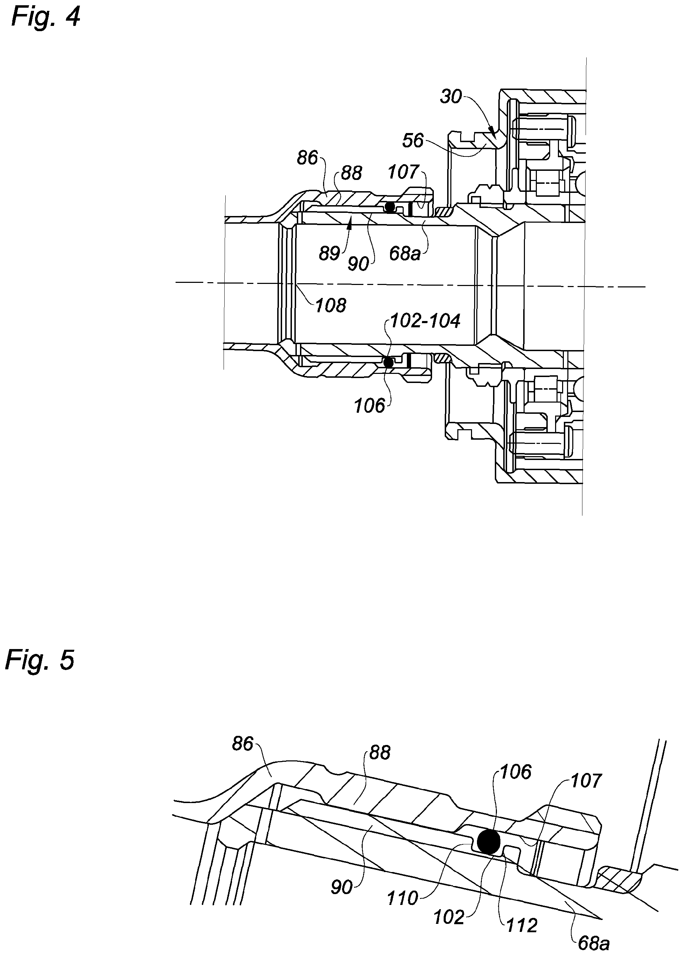

La figure 4 montre à titre d'exemple un dispositif d'accouplement destiné par exemple à entrainer le pignon d'entrainement 60b d'au moins un accessoire 68, 74 précédemment décrit à la figure 3, selon un état de la technique antérieure.

Le pignon (non représenté sur la figure 4) est ici apte à entraîner deux arbres coaxiaux de deux accessoires, dont on a représenté ici seulement l'arbre 68a qui pénètre par la face latérale arrière 56 du carter 30 du boîtier d'accessoires 30. Les accessoires sont situés respectivement sur les deux faces opposées du carter.

Le pignon (non représenté sur la figure 4) comporte un manchon 86 accouplé à l'arbre cylindrique 68a de l'accessoire. Le manchon 86 comporte à cet effet des premières cannelures rectilignes internes 88 d'accouplement coopérant avec des cannelures externes 90 de l'arbre 68a de l'accessoire. Cette disposition n'est pas limitative de l'invention et l'accouplement par cannelures pourrait être réalisé sans manchon, directement entre l'arbre 68a et le pignon.

Les cannelures 88, 90 autorisent des déplacements axiaux relatifs entre l'arbre 68a de l'accessoire 68 et le pignon.

Comme l'illustre la figure 5, ce dispositif d'accouplement conventionnel 89 comporte un système de retenue d'huile de lubrification circulant à travers les cannelures 88, 90. A cet effet une gorge annulaire 102 de réception d'un joint annulaire 106, notamment torique, est située à proximité de l'accouplement par cannelures 88, 90 pour assurer un certain niveau d'huile de lubrification dans ces cannelures. Le joint annulaire 106 coopère avec une surface cylindrique 107 du manchon 86.

Un distributeur d'huile de lubrification est en outre monté à l'intérieur du manchon 86. Comme l'illustre la figure 4, l'arbre 68a peut être creux et le distributeur comprend un passage axial 104 et au moins un perçage radial 108 pour l'alimentation en huile des cannelures 88, 90.

L'arbre 68a forme ici un organe mâle dont les cannelures externes 90 sont engagées complémentairement avec les cannelures internes 88 du manchon 86 qui forme ici un organe femelle. La gorge annulaire 102 de réception du joint annulaire 106 coopère avec la surface cylindrique 107 du manchon 86 qui est décalée axialement par rapport aux cannelures internes 88 du manchon 86.

Conventionnellement la gorge 102 de réception de l'organe mâle, ici l'arbre 68a, est formée directement dans les cannelures externes 90, qu'elle interrompt, de sorte que des parois transversales de la gorge 102, qui forment surfaces d'appui du joint 106, sont définies par les extrémités libres 110, 112 des cannelures 90 et sont discontinues.

A l'usage, et du fait du déplacement axial et angulaire relatif des cannelures mâles 90 par rapport aux cannelures femelles 88, on a constaté une usure du joint annulaire 106 entre les cannelures 90. Ceci conduit à une perte d'étanchéité entre les cannelures 90 mâle et 88 femelle.

Pour remédier à cet inconvénient, l'invention propose une modification des surfaces d'appui du joint 106 en séparant la gorge de réception 102 du joint 106 de la gorge de l'arbre 68a.

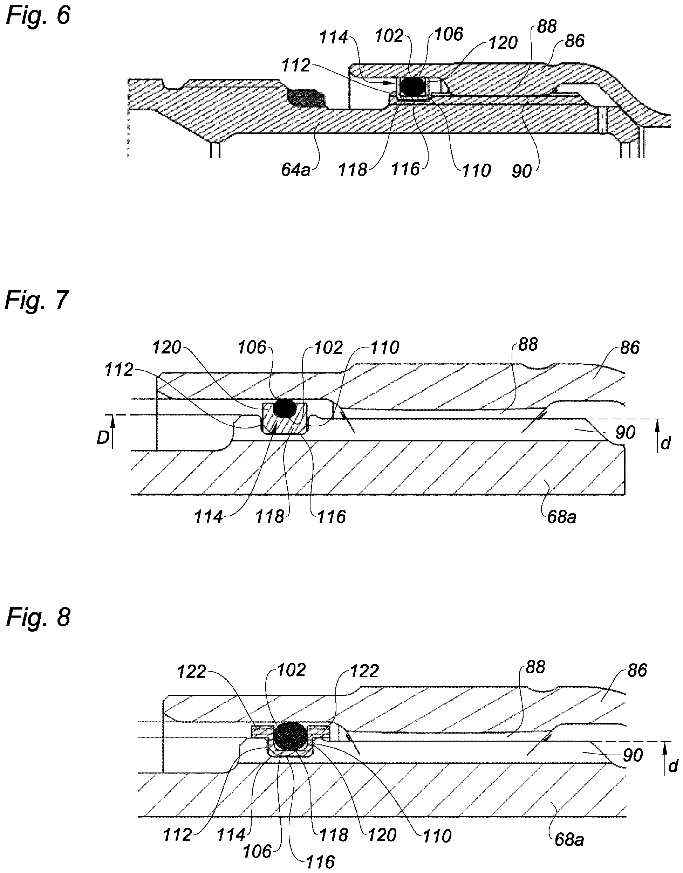

Dans ce but, comme l'illustre la figure 6, l'invention propose un dispositif d'accouplement 89 du type décrit précédemment, caractérisé en ce que la gorge annulaire de réception 102 est formée dans un insert annulaire 114 qui est rapporté dans une gorge annulaire fixe 116 formée dans les cannelures externes 90 de l'organe mâle 68a.

L'insert annulaire 114 peut présenter différentes sections.

Par exemple, l'insert 114 peut présenter une section présentant, en coupe dans un plan axial, une forme de U, comme représenté aux figures 6 et 7.

L'insert annulaire 114 comporte au moins une paroi annulaire de fond 118 s'étendant axialement le long d'un fond de la gorge annulaire fixe 116 et au moins deux parois annulaires transversales 120 s'étendant radialement à partir de cette paroi annulaire de fond, qui délimitent axialement la gorge annulaire de réception 102.

Les deux parois annulaires transversales 120 prennent appui de part et d'autre de la paroi annulaire de fond 118 sur l'une des deux extrémités axiales libres 110, 112 des cannelures externes 90 de l'arbre 67a formant l'organe mâle, interrompues par la gorge annulaire fixe 116, avec un jeu axial réduit. De la sorte, elles immobilisent parfaitement axialement l'insert 114 dans la gorge 116 tout en protégeant le joint 106 de l'usure.

Dans le premier mode de réalisation de la figure 6, la paroi annulaire de fond 118 et les deux parois annulaires transversales 120 sont de même épaisseur. De manière non limitative, l'insert 114 est par exemple réalisé par emboutissage.

Dans le deuxième mode de réalisation de la figure 7, la paroi annulaire de fond 118 et les deux parois annulaires transversales 120 ne sont pas de même épaisseur, la paroi annulaire de fond 118 étant plus épaisse que les deux parois annulaires transversales 120. L'insert 114 est réalisé par moulage, par impression 3D ou par usinage d'une bague pleine.

Par exemple, comme l'illustre la figure 7, la gorge annulaire de réception 102 peut présenter la forme de gouttière annulaire, venue de moulage ou d'usinage, qui délimite la paroi annulaire de fond 116 et les deux parois annulaires transversales 120, et qui est agencée selon un diamètre D supérieur au diamètre du jeu de cannelures externes 90. De manière non limitative de l'invention, la gouttière peut être de section axiale semi-circulaire. Elle peut être réalisée par moulage ou par usinage.

L'insert 114 peut présenter une section axiale en forme de Ω, comme représenté selon un troisième mode de réalisation de l'insert visible à la figure 8.

Dans ce cas, l'insert 114 comporte en outre deux parois tubulaires axiales 122, d'un diamètre interne correspondant au diamètre d des cannelures externes 90, qui s'étendent de part et d'autre à partir des parois annulaires transversales 120 en prenant appui sur un diamètre externe de diamètre d des cannelures externes 90. Cette configuration conforte ainsi la stabilité de l'insert 114 et donc du joint 106.

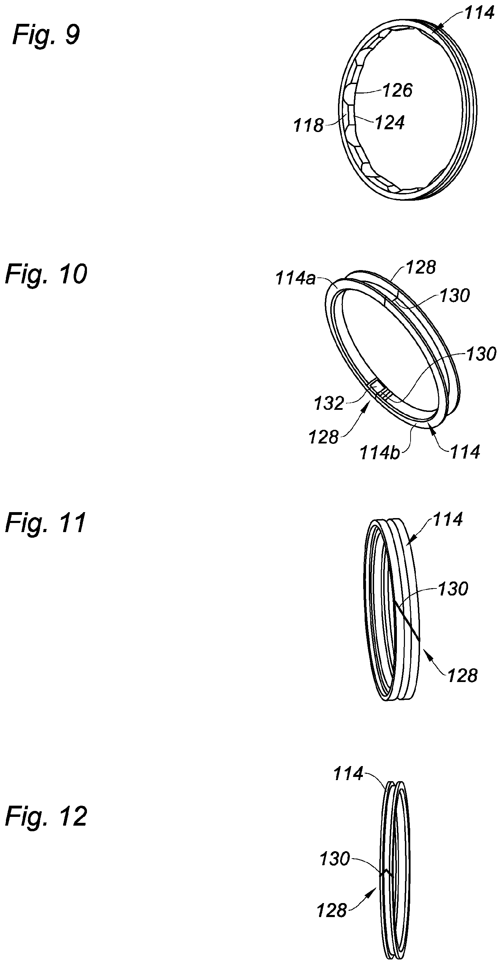

Comme l'illustre la figure 9, une face annulaire 124 de la paroi annulaire de fond 118 de l'insert 114 comporte des alvéoles 126 traversant axialement l'insert 114 pour permettre une circulation d'huile sous l'insert 114.

Pour permettre le montage de l'insert 114 sur l'arbre 68a et en particulier dans les cannelures 90, l'insert 114 comporte au moins un moyen d'ouverture 128 de l'insert annulaire 114 qui est configuré pour permettre une augmentation temporaire de diamètre dudit insert 114 permettant son montage dans la gorge annulaire fixe 116.

Par exemple, comme l'illustrent les figures 10 à 12, le moyen d'ouverture 128 de l'insert annulaire 114 comporte au moins une fente 130 coupant l'insert annulaire. Comme l'illustre la figure 11, l'insert 114 peut comporter une fente 130 en biseau, ou comme l'illustre la figure 12, une fente 130 en chevron.

En variante comme l'illustre la figure 10, le moyen d'ouverture 128 de l'insert annulaire 114 peut comporter deux fentes 130 diamétralement opposées coupant l'insert annulaire 114 en deux demi-inserts 114a, 114b semi-annulaires et des moyens de fixation 132 amovibles des deux demi-inserts semi-annulaires 114a, 114b l'un à l'autre.

L'invention permet donc d'améliorer avantageusement la longévité d'un joint annulaire d'un tel accouplement par cannelures 89.

## Revendications

1. Dispositif d'accouplement par cannelures (89) de deux organes (68a, 86) de turbomachine d'aéronef, dont un organe mâle (68a) comportant des cannelures externes (90) engagé dans un organe femelle (86) comportant des cannelures internes (88) complémentaires, ledit dispositif (89) comportant en outre un système de retenue d'huile de lubrification circulant à travers lesdites cannelures (88, 90), ledit système de retenue d'huile comportant un joint annulaire (106) qui est reçu dans une gorge annulaire de réception (102) du joint, portée par l'organe mâle (68a) et qui coopère avec une surface cylindrique interne (107) de l'organe femelle (86) décalée axialement des cannelures internes (88), **caractérisé en ce que** ladite gorge annulaire (102) de réception du joint est formée dans un insert annulaire (114) qui est rapporté dans une gorge annulaire fixe (16) formée dans les cannelures externes (90) de l'organe mâle (68a).

2. Dispositif d'accouplement (89) selon la revendication 1, **caractérisé en ce que** l'insert annulaire (114) comporte au moins une paroi annulaire de fond (118) s'étendant axialement le long d'un fond de la gorge annulaire fixe (116) et au moins deux parois annulaires transversales (120) s'étendant radialement à partir de cette paroi annulaire de fond (118), qui délimitent axialement la gorge annulaire de réception (102), lesdites deux parois annulaires transversales (120) prenant appui de part et d'autre de la paroi annulaire de fond (118) sur une extrémité axiale libre (110, 112) des cannelures externes (90) de l'organe mâle interrompues par ladite gorge annulaire fixe (102).

3. Dispositif d'accouplement (89) selon la revendication 2, caractérisé en que l'insert (114) comporte en outre deux parois tubulaires axiales (122), d'un diamètre interne (d) correspondant à celui des cannelures externes (90), qui s'étendent de part et d'autre à partir des parois annulaires transversales (120) en prenant appui sur un diamètre externe (d) des cannelures externes (90).

4. Dispositif d'accouplement (89) selon l'une des revendications 2 ou 3, **caractérisé en ce que** la gorge annulaire de réception (102) présente une forme de gouttière annulaire qui délimite la paroi annulaire de fond (116) et les deux parois annulaires transversales (120), et qui est agencée selon un diamètre supérieur à celui (d) des cannelures externes (90).

5. Dispositif d'accouplement (89) selon l'une des revendications 1 à 4, **caractérisé en ce qu'**il comporte au moins un moyen d'ouverture (128) de l'insert annulaire (114) qui est configuré pour permettre une augmentation temporaire de diamètre dudit insert (114) permettant son montage dans la gorge annulaire fixe (116).

6. Dispositif d'accouplement (89) selon la revendication 5, **caractérisé en ce que** ledit au moins un moyen d'ouverture (128) de l'insert annulaire (114) comporte au moins une fente (130) coupant l'insert annulaire (114).

7. Dispositif d'accouplement (89) selon la revendication 6, **caractérisé en ce que** ledit au moins un moyen d'ouverture (128) de l'insert annulaire (114) comporte deux fentes (130) diamétralement opposées coupant l'insert annulaire (114) en deux demi-inserts (114a, 114b) semi-annulaires et des moyens de fixation amovibles (132) des deux demi-inserts semi-annulaires (114a, 114b) l'un à l'autre.

8. Turbomachine d'aéronef comportant un arbre d'accessoire (68a) et un pignon d'entraînement (60b) d'un boîtier d'accessoires (30), **caractérisée en ce qu'**elle comporte un dispositif d'accouplement (89) selon l'une des revendications 1 à 7 interposé entre ledit arbre d'accessoire (68a) et ledit pignon d'entraînement (60b).

9. Turbomachine selon la revendication 8 comportant un carter et le boîtier (30) d'accessoires monté sur ledit carter de ladite turbomachine, ledit boîtier portant au moins un accessoire comportant l'arbre d'accessoire (68a) lié en rotation à ladite turbomachine et le boîtier (30) d'accessoires comportant un train d'engrenages interne comportant au moins le pignon d'entraînement accouplé à l'arbre d'accessoire (68a) dudit accessoire par l'intermédiaire du dispositif d'accouplement (89).

## Patentansprüche

1. Keilnutkopplungsvorrichtung (89) für zwei Teile (68a, 86) einer Turbomaschine eines Luftfahrzeugs, darunter ein männliches Teil (68a), das äußere Keilnuten (90) umfasst, die in ein weibliches Teil (86) eingreifen, das komplementäre innere Keilnuten (88) umfasst, wobei die Vorrichtung (89) weiter ein Rückhaltesystem für Schmieröl, das durch die Keilnuten (88, 90) strömt, umfasst, wobei das Ölrückhaltesystem eine ringförmige Dichtung (106) umfasst, die in einer ringförmigen Aufnahmenut (102) der Dichtung aufgenommen ist, die von dem männlichen Teil (68a) getragen wird und die mit einer inneren zylindrischen Oberfläche (107) des weiblichen Teils (86), die von den inneren Keilnuten (88) axial versetzt ist, zusammenwirkt, **dadurch gekennzeichnet, dass** die ringförmige Aufnahmenut (102) der Dichtung in einem ringförmigen Einsatz (114) gebildet ist, der in einer festsitzenden ringförmigen Nut (16) angebracht ist, die in den äußeren Keilnuten (90) des männlichen Teils (68a) gebildet ist.

2. Kopplungsvorrichtung (89) nach Anspruch 1, **dadurch gekennzeichnet, dass** der ringförmige Einsatz (114) mindestens eine ringförmige Bodenwand (118), die sich axial entlang eines Bodens der festsitzenden ringförmigen Nut (116) erstreckt, und mindestens zwei querverlaufende ringförmige Wände (120) umfasst, die sich radial ausgehend von dieser ringförmigen Bodenwand (118) erstrecken, die die ringförmige Aufnahmenut (102) axial begrenzen, wobei die zwei querverlaufenden ringförmigen Wände (120) auf beiden Seiten der ringförmigen Bodenwand (118) an einem freien axialen Ende (110, 112) der äußeren Keilnuten (90) des männlichen Teils, von der ringförmigen festsitzenden Nut (102) unterbrochen, aufliegen.

3. Kopplungsvorrichtung (89) nach Anspruch 2, **dadurch gekennzeichnet, dass** der Einsatz (114) weiter zwei axiale rohrförmige Wände (122) mit einem Innendurchmesser (d), der jenem der äußeren Keilnuten (90) entspricht, umfasst, die sich auf beiden Seiten ausgehend von den querverlaufenden ringförmigen Wände (120) erstrecken, indem sich auf einem Außendurchmesser (d) der äußeren Keilnuten (90) aufliegen.

4. Kopplungsvorrichtung (89) nach einem der Ansprüche 2 oder 3, **dadurch gekennzeichnet, dass** die ringförmige Aufnahmenut (102) die Form einer ringförmigen Rinne aufweist, die die ringförmige Bodenwand (116) und die zwei querverlaufenden ringförmigen Wände (120) begrenzt und die gemäß einem Durchmesser eingerichtet ist, der größer ist als jener (d) der äußeren Keilnuten (90).

5. Kopplungsvorrichtung (89) nach einem der Ansprüche 1 bis 4, **dadurch gekennzeichnet, dass** sie mindestens ein Öffnungsmittel (128) des ringförmigen Einsatzes (114) umfasst, das konfiguriert ist, um eine vorübergehende Vergrößerung des Durchmessers des Einsatzes (114) zu ermöglichen, wodurch seine Montage in die festsitzende ringförmige Nut (116) ermöglicht wird.

6. Kopplungsvorrichtung (89) nach Anspruch 5, **dadurch gekennzeichnet, dass** das mindestens eine Öffnungsmittel (128) des ringförmigen Einsatzes (114) mindestens einen Schlitz (130) umfasst, der den ringförmigen Einsatz (114) schneidet.

7. Kopplungsvorrichtung (89) nach Anspruch 6, **dadurch gekennzeichnet, dass** das mindestens eine Öffnungsmittel (128) des ringförmigen Einsatzes (114) zwei diametral gegenüberliegende Schlitze (130), die den ringförmigen Einsatz (114) in zwei halbkreisförmige Halbeinsätze (114a, 114b) schneiden, und abnehmbare Mittel zum Befestigen (132) der zwei halbkreisförmigen Halbeinsätze (114a, 114b) aneinander umfasst.

8. Turbomaschine eines Luftfahrzeugs, umfassend eine Zubehörwelle (68) und ein Antriebsritzel (60b) eines Zubehörgehäuses (30), **dadurch gekennzeichnet, dass** sie eine Kopplungsvorrichtung (89) nach einem der Ansprüche 1 bis 7 umfasst, die zwischen der Zubehörwelle (68a) und dem Antriebsritzel (60b) eingefügt ist.

9. Turbomaschine nach Anspruch 8, umfassend ein Kurbelgehäuse und das Zubehörgehäuse (30), das auf dem Kurbelgehäuse der Turbomaschine montiert ist, wobei das Kurbelgehäuse mindestens ein Zubehör trägt, das die Zubehörwelle (68a) umfasst, die drehend mit der Turbomaschine verbunden ist, und wobei das Zubehörgehäuse (30) ein inneres Räderwerk umfasst, das mindestens das Antriebsritzel umfasst, das mithilfe der Kopplungsvorrichtung (89) mit der Zubehörwelle (68a) gekoppelt ist.

## Claims

1. Device for coupling by meshing (89) two aircraft turbine engine members (68a, 86), including a male member (68a) comprising outer meshes (90), engaged in a female member (86) comprising complementary inner meshes (88), said device (89) further comprising a system for retaining lubrication oil circulating through said meshes (88, 90), said oil retaining system comprising an annular seal (106) which is received in a seal groove for receiving (102) the seal, carried by the male member (68a) and which engages with an inner cylindrical surface (107) of the female member (86) axially offset from the inner meshes (88), **characterised in that** said annular groove (102) for receiving the seal is formed in an annular insert (114) which is offset in a fixed annular groove (16) formed in the outer meshes (90) of the male member (68a).

2. Coupling device (89) according to claim 1, **characterised in that** the annular insert (114) comprises at least one bottom annular wall (118) extending axially along a bottom of the fixed annular groove (116) and at least two transverse annular walls (120) extending radially from this bottom annular wall (118), which axially delimit the annular groove (102), said transverse annular walls (120) bearing on either side of the bottom annular wall (118) on a free axial end (110, 112) of the outer meshes (90) of the male member interrupted by said fixed annular groove (102).

3. Coupling device (89) according to claim 2, **characterised in that** the insert (114) further comprises two axial tubular walls (122), an inner diameter (d) of which corresponding to that of the outer meshes (90), which extend on either side from the transverse annular walls (120) by bearing on an outer diameter (d) of the outer meshes (90).

4. Coupling device (89) according to one of claims 2 or 3, **characterised in that** the annular receiving groove (102) has an annular trough shape, which delimits the bottom annular wall (116) and the two transverse annular walls (120), and which is arranged according to a diameter greater than that (d) of the outer meshes (90).

5. Coupling device (89) according to one of claims 1 to 4, **characterised in that** it comprises at least one means for opening (128) the annular insert (114) which is configured to enable a temporary increase in diameter of said insert (114) enabling it to be mounted in the fixed annular groove (116).

6. Coupling device (89) according to claim 5, **characterised in that** said at least one means for opening (128) the annular insert (114) comprises at least one slot (130) cutting the annular insert (114).

7. Coupling device (89) according to claim 6, **characterised in that** said at least one means for opening (128) the annular insert (114) comprises two slots (130), diametrically opposite, cutting the annular insert (114) into two semi-annular semi-inserts (114a, 114b) and removable securing means (132) the two semi-annular semi-inserts (114a, 114b) to one another.

8. Aircraft turbine engine comprising an accessory shaft (68a) and a drive pinion (60b) of an accessory case (30), **characterised in that** it comprises a coupling device (89) according to one of claims 1 to 7 interleaved between said accessory shaft (68a) and said drive pinion (60b).

9. Turbine engine according to claim 8 comprising a casing and the accessory case (30) mounted on said casing of said turbine engine, said case carrying at least one accessory comprising the accessory shaft (68a) rotatably connected to said turbine engine and the accessory case (30) comprising an inner gear train comprising at least the drive pinion coupled with the accessory shaft (68a) of said accessory by way of the coupling device (89).
